# EUROPEAN PATENT APPLICATION

(11) **EP 4 642 087 A1**
(43) Date of publication of application: **29.10.2025**
(21) Application number: 22968960.9
(22) Date of filing: 22.12.2022
(51) Int. Cl.: H04W 24/10

(54) **COMMUNICATION METHOD AND APPARATUS**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2022/141160
(87) International publication number: WO 2024/130665

(57) **Abstract**

A communication method and apparatus. The method comprises: executing an early measurement report (EMR) measurement according to a network configuration or a protocol agreement, wherein the network configuration or the protocol agreement comprises validity conditions of a result of the EMR measurement. The present disclosure can ensure the effectiveness and reliability of reported measurement results by utilizing validity conditions of a result of an EMR measurement.

## Description

### TECHNICAL FIELD

The present disclosure relates to the field of communication technologies, and in particular to a communication method and apparatus.

### BACKGROUND

In New Radio (NR) technologies, for a terminal device that supports Carrier Aggregation (CA)/Dual Connection (DC), when the terminal device leaves a connected state and enters an idle state, in order to speed up an addition procedure for CA/DC when entering the connected state subsequently, Early Measurement Report (EMR) measurement reporting is introduced.

### SUMMARY

In order to overcome a problem existing in the related art, the present disclosure provides a communication method and apparatus.

According to a first aspect of an embodiment of the present disclosure, a communication method is provided. The method is applied in a terminal device, and the method includes:
performing an Early Measurement Report (EMR) measurement according to a network configuration or a specification, wherein the network configuration or the specification includes a validity condition for a result of the Early Measurement Report (EMR) measurement.

According to a second aspect of an embodiment of the present disclosure, a communication method is provided. The method is applied in a network side device, and the method includes:
sending a network configuration to a terminal device to indicate the terminal device to perform an Early Measurement Report (EMR) measurement based on the network configuration, wherein the network configuration includes a validity condition for a result of the Early Measurement Report (EMR) measurement.

According to a third aspect of an embodiment of the present disclosure, a communication apparatus is provided. The apparatus is applied in a terminal device, and the apparatus includes:
an execution module configured to perform an Early Measurement Report (EMR) measurement according to a network configuration or a specification, wherein the network configuration or the specification includes a validity condition for a result of the Early Measurement Report (EMR) measurement.

According to a fourth aspect of an embodiment of the present disclosure, a communication apparatus is provided. The apparatus is applied in a network side device, and the apparatus includes:
a sending module configured to send a network configuration to a terminal device to indicate the terminal device to perform an Early Measurement Report (EMR) measurement based on the network configuration, wherein the network configuration includes a validity condition for a result of the Early Measurement Report (EMR) measurement.

According to a fifth aspect of an embodiment of the present disclosure, a terminal device is provided. The terminal device includes:
a first processor; and
a first memory configured to store instructions executable by the first processor;
wherein the first processor is configured to execute the executable instructions to implement the communication method provided in the first aspect of the present disclosure.

According to a sixth aspect of an embodiment of the present disclosure, a network side device is provided. The network side device includes:
a second processor; and
a second memory configured to store instructions executable by the second processor;
wherein the second processor is configured to execute the executable instructions to implement the communication method provided in the second aspect of the present disclosure.

According to a seventh aspect of an embodiment of the present disclosure, a computer-readable storage medium is provided. Computer program instructions are stored on the computer-readable storage medium. When the program instructions are executed by a processor, the step(s) of the communication method provided in the first aspect or the second aspect of the present disclosure is(are) implemented.

The technical solutions provided by the embodiments of the present disclosure may include the following beneficial effects. The terminal device may perform the Early Measurement Report (EMR) measurement according to the network configuration or the specification, where the network configuration or the specification includes the validity condition for the result of the Early Measurement Report (EMR) measurement. By utilizing the validity condition for the result of the Early Measurement Report (EMR) measurement, validity and reliability of the reported measurement result can be guaranteed.

It is to be understood that the foregoing general description and the following detailed description are illustrative and explanatory only and are not restrictive of the present disclosure.

### BRIEF DESCRIPTION OF THE DRAWINGS

The above and/or additional aspects and advantages of the present disclosure will become apparent and easily understood from the following description of the embodiments in conjunction with the accompanying drawings, in which:
FIG. 1 is an application scenario to which a communication method is applicable according to some embodiments.
FIG. 2 is a flowchart of a communication method according to some embodiments.
FIG. 3 is a flowchart of a communication method according to some other embodiments.
FIG. 4 is a flowchart of a communication method according to yet some embodiments.
FIG. 5 is a flowchart of a communication method according to still some embodiments.
FIG. 6 is a diagram showing an example of a relationship between a first timer and a second timer in a communication method according to still other embodiments.
FIG. 7 is a flowchart of a communication method according to yet some embodiments.
FIG. 8 is a flowchart of a communication method according to still other embodiments.
FIG. 9 is a flowchart of a communication method according to yet some embodiments.
FIG. 10 is a flowchart of a communication method according to still some embodiments.
FIG. 11 is a flowchart of a communication method according to yet some embodiments.
FIG. 12 is a flowchart of a communication method according to some embodiments.
FIG. 13 is a block diagram of a communication apparatus according to some embodiments.
FIG. 14 is a block diagram of a communication apparatus according to some embodiments.
FIG. 15 is a block diagram of a terminal device according to some embodiments.
FIG. 16 is a block diagram of a network side device according to some embodiments.

### DETAILED DESCRIPTION

Example embodiments will be described in detail herein, examples of which are shown in the accompanying drawings. When the following description refers to the drawings, the same numbers in different drawings represent the same or similar elements unless otherwise indicated. The implementations described in the following example embodiments do not represent all implementations consistent with the present disclosure. Instead, they are merely examples of apparatuses and methods consistent with some aspects of the present disclosure as detailed in the appended claims.

It should be noted that all actions of obtaining signal(s), information or data in the present disclosure are carried out in the premise of complying with relevant data protection laws and policies of a country where the present disclosure is implemented, and the present disclosure are carried out with an authorization given by an owner of a corresponding apparatus.

In the description of the present disclosure, terms used herein such as "first", "second", etc., are used to distinguish similar objects and do not have to be understood as a specific order or sequence. In addition, in the description with reference to the accompanying drawings, the same symbols in different drawings represent the same elements unless otherwise stated.

In the description of the present disclosure, unless otherwise specified, "multiple" means two or more than two, and other quantifiers are similar; "at least one item (at least one) ", "one or more items (one or more)" or similar expressions refer to any combination of these items, including any combination of a single item or plural items. For example, at least one item (at least one) may represent any number. For another example, one or more items (one or more) among a, b and c may represent: a, b, c, a-b, a-c, b-c, or a-b-c, where a, b, c may be single or multiple. The expression "and/or" is a kind of association relationship that describes associated objects, indicating that there may be three relationships. For example, A and/or B may represent: A exists alone, A and B exist at the same time, and B exists alone, where A, B may be singular or plural.

Although operations or steps are described in a specific order in the drawings in the embodiments of the present disclosure, it should not be understood that it is required to perform these operations or steps in the specific order shown in the drawings or in a serial order, or to perform all the operations or steps shown to obtain a desired result. In the embodiments of the present disclosure, these operations or steps may be performed in series; these operations or steps may also be performed in parallel; or a part of these operations or steps may be performed.

An implementation environment of an embodiment of the present disclosure is first introduced below.

The technical solutions of embodiments of the present disclosure may be applied to various communication systems. The communication system may include one or more of: a 4G (the 4th Generation, fourth generation) communication system, a 5G (the 5th Generation, fifth generation) communication system, and other future wireless communication systems (such as 6G). The communication system may also include one or more of: a Public Land Mobile Network (PLMN) network, a Device-to-Device (D2D) communication system, a Machine to Machine (M2M) communication system, an Internet of Things (IoT) communication system, a Vehicle-to-Everything (V2X) communication system or other communication system(s).

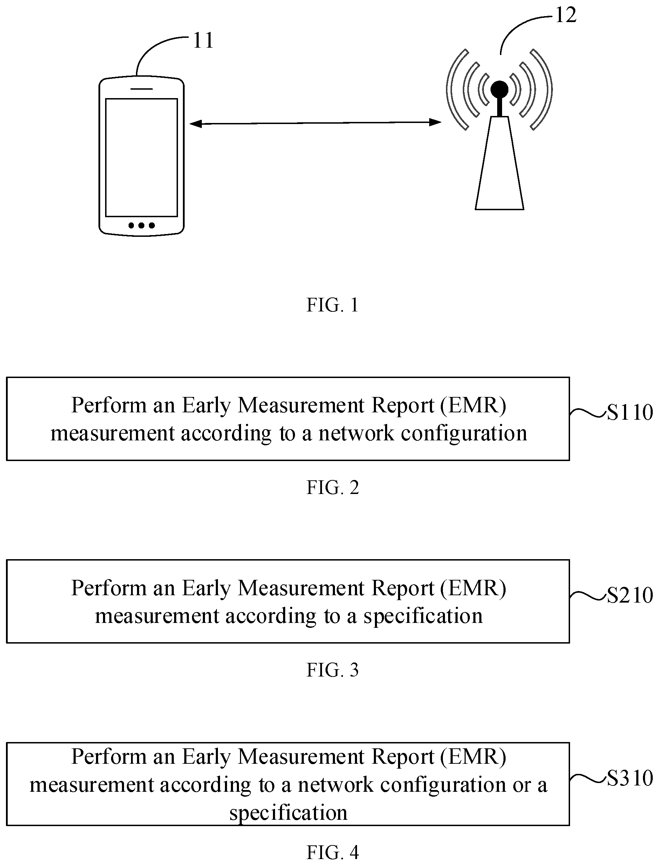

FIG. 1 is a schematic diagram of a communication system according to an example embodiment. As shown in FIG. 1, the communication system may include a terminal device 11 and a network side device 12. The communication system may be used to support a 4G network access technology, such as Long Term Evolution (LTE) access technology, or 5G network access technology, such as New Radio Access Technology (New RAT), or other future wireless communication technologies. It should be noted that in the communication system, the number of network side device(s) 12 and terminal device(s) 11 may be one or more, and the number of network side device(s) 12 and terminal device(s) 11 in the communication system shown in FIG. 1 is only an applicable example, and the present disclosure does not limit this.

The network side device 12 in FIG. 1 may be used to support access of the terminal device 11. For example, the network side device 12 may be an evolved base station (evolutional Node B, eNB or eNodeB) in LTE. The network side device 12 may also be the next generation base station (the next Generation Node B, gNB or gNodeB) in the 5G network. The network side device 12 may also be a radio access network (NG Radio Access Network, NG-RAN) device in the 5G network. The network side device 12 may also be a base station in a future evolved Public Land Mobile Network (PLMN), a broadband network service gateway (Broadband Network Gateway, BNG), an aggregation switch or a non-3GPP (3rd Generation Partnership Project) access device, etc.

Optionally, the network side device 12 in the embodiments of the present disclosure may include various forms of base stations, such as: a macro base station, a micro base station (also called small station), a relay station, an access point, a 5G base station or a future base station, a satellite, a Transmitting and Receiving Point (TRP), a Transmitting Point (TP), a mobile switching center, and a device that assumes the function(s) of a base station in Device-to-Device (D2D), Machine-to-Machine (M2M), Internet of Things (IoT), Vehicle-to-Everything (V2X) or other communications, etc., which are not specifically limited in the embodiments of the present disclosure. For the convenience of description, in all embodiments of the present disclosure, apparatus(apparatuses) that provides(provide) wireless communication function(s) for the terminal device 11 is(are) collectively referred to as a network side device 12 or a base station.

The terminal device 11 in FIG. 1 may be an electronic device that provides voice or data connectivity. For example, the terminal device 11 may also be referred to as User Equipment (UE), a subscriber unit, a mobile station, a station, a terminal, etc. For example, the terminal device 11 may include a smart phone, a smart wearable device, a smart speaker, a smart tablet, a wireless modem, a Wireless Local Loop (WLL) station, a Personal Digital Assistant (PDA), Customer Premise Equipment (CPE), etc. With the developments of wireless communication technologies, a device that may access a communication system, may communicate with a network side device of a communication system, may communicate with other object(s) through a communication system, or a device that may perform a direction communication between two or more devices may all be the terminal device 11 in the embodiments of the present disclosure. For example, the terminal device 11 may be a terminal and a car in smart transportation, a household appliance in a smart home, a power meter reading instrument in smart grids, a voltage monitoring instrument, an environmental monitoring instrument, a video monitoring instrument in a smart security network, a cash register, etc. In the embodiments of the present disclosure, the terminal device 11 may communicate with the network side device 12. Multiple terminal devices 11 may also communicate with each other. The terminal device 11 may be statically fixed or may be mobile, which is not limited in the present disclosure.

In NR specifications, in order to support rapid establishment of DC connection/CA connection, EMR measurement reporting is introduced. That is, during a validity period of a timer T331, a terminal device may perform a downlink measurement in an idle state or an inactive state according to carrier measurement information configured by a network side device. When timer T331 expires, the terminal device may stop measurement on an EMR carrier. However, if the terminal device receives a paging message and initiates random access a considerable time after the end of the EMR measurement, the EMR measurement result may be invalid or unreliable.

FIG. 2 is a flowchart of a communication method according to some embodiments. As shown in FIG. 2, the communication method may be applied in a terminal device, and includes the following step.

In step S110, an Early Measurement Report (EMR) measurement is performed according to a network configuration.

In some implementations, the terminal device may perform the Early Measurement Report (EMR) measurement according to the network configuration. The network configuration may be obtained by the terminal device from a network side device. In addition, the network configuration may include a validity condition for a result of the Early Measurement Report (EMR) measurement.

As an optional method, when performing the Early Measurement Report (EMR) measurement according to the network configuration, the terminal device may determine whether the obtained measurement result is valid based on the validity condition for the Early Measurement Report (EMR) measurement result in the network configuration. If the measurement result is determined to be valid, the terminal device may send the measurement result to the network side device.

Optionally, if it is determined that the measurement result is invalid, the terminal device may re-perform an Early Measurement Report (EMR) measurement, thereby ensuring reliability of the measurement result.

In an embodiment of the present disclosure, the terminal device may configure the validity condition for the result of the EMR measurement through an Information Element (IE) idle state measurement configuration (MeasIdleConfig). In other words, the terminal device may receive the information element idle state measurement configuration (IEMeasIdleConfig) from the network side device. The information element idle state measurement configuration (IEMeasIdleConfig) may include the validity condition for the result of the Early Measurement Report (EMR) measurement.

In addition, the terminal device may carry the idle state measurement configuration (MeasIdleConfig) in a Radio Resource Control (RRC) protocol release message (RRCRelease) or a System Information Block (SIB).

As an optional method, when the terminal device is in an idle state/inactive state, the terminal device may perform the EMR measurement according to the information element idle state measurement configuration (IEMeasIdleConfig). When the result of the Early Measurement Report (EMR) measurement is determined to be invalid based on the validity condition, the terminal device may perform a new EMR measurement.

In some implementations, the Early Measurement Report (EMR) may be a measurement report sent through a message 3 (message a) or a message 5.

Optionally, the Early Measurement Report (EMR) may also be sent through other message(s) or signaling. For example, before an access network device sends a contention resolution message message 4 (or message b), the Early Measurement Report (EMR) and the message 3 (or message a) may be multiplexed in the same MAC data packet, for example, multiplexed in a MAC Service Data Unit (SDU), or the Early Measurement Report (EMR) and the message 3 (or message a) may be sent on different uplink grant resources before the message 4 (or message b).

As specified in the embodiments of the present disclosure, the terminal device may perform the Early Measurement Report (EMR) measurement according to the network configuration, where the network configuration includes the validity condition for the result of the Early Measurement Report (EMR) measurement. By utilizing the validity condition for the result of the Early Measurement Report (EMR) measurement, validity and reliability of the reported measurement result can be guaranteed.

FIG. 3 is a flowchart of a communication method according to some other embodiments. As shown in FIG. 3, the communication method may be applied in a terminal device, and includes the following step.

In step S210, an Early Measurement Report (EMR) measurement is performed according to a specification.

In some implementations, the terminal device may perform the Early Measurement Report (EMR) measurement according to the specification. The specification may include a validity condition for a result of the Early Measurement Report (EMR) measurement.

As an optional method, when performing the Early Measurement Report (EMR) measurement according to the specification, the terminal device may determine whether the obtained measurement result is valid based on the validity condition for the result of the Early Measurement Report (EMR) measurement in the specification. If the measurement result is determined to be valid, the terminal device may send the measurement result to a network side device.

Optionally, if it is determined that the measurement result is invalid, the terminal device may re-perform an Early Measurement Report (EMR) measurement, so as to guarantee the reliability of the measurement result.

It should be noted that, for multiple embodiments or features separated by "or", even if some of the features are unimplementable, no influence will be caused to other solutions. In addition, embodiments of the present disclosure may be combined with other embodiments or implementations involved in the communication method(s) applied at the terminal device and various optional solutions thereof if such combination will not result in contradiction, and repeated descriptions will be omitted here.

As specified in the embodiments of the present disclosure, the terminal device may perform the Early Measurement Report (EMR) measurement according to the specification, wherein the specification includes the validity condition for the result of the Early Measurement Report (EMR) measurement. By utilizing the validity condition for the result of the Early Measurement Report (EMR) measurement, the validity and reliability of the reported measurement result can be guaranteed.

FIG. 4 is a flowchart of a communication method according to some other embodiments. As shown in FIG. 4, the communication method may be applied in a terminal device, and includes the following step.

In step S310, an Early Measurement Report (EMR) measurement is performed according to a network configuration or a specification.

In an embodiment of the present disclosure, the terminal device may perform the Early Measurement Report (EMR) measurement according to the network configuration, or may perform the Early Measurement Report (EMR) measurement according to the specification, or may perform the Early Measurement Report (EMR) measurement according to the network configuration and the specification.

As can be known from the above introductions, the network configuration or the specification may include the validity condition for the result of the Early Measurement Report (EMR) measurement. When it is determined that the validity condition for the result of the Early Measurement Report (EMR) measurement in any one of the network configuration and the specification is not fulfilled, a new EMR measurement may be performed on a target carrier.

As specified in the embodiments of the present disclosure, the terminal device may perform the Early Measurement Report (EMR) measurement according to the network configuration or the specification, wherein the network configuration or the specification includes the validity condition for the result of the Early Measurement Report (EMR) measurement. By utilizing the validity condition for the result of the Early Measurement Report (EMR) measurement, the validity and reliability of the reported measurement result can be guaranteed.

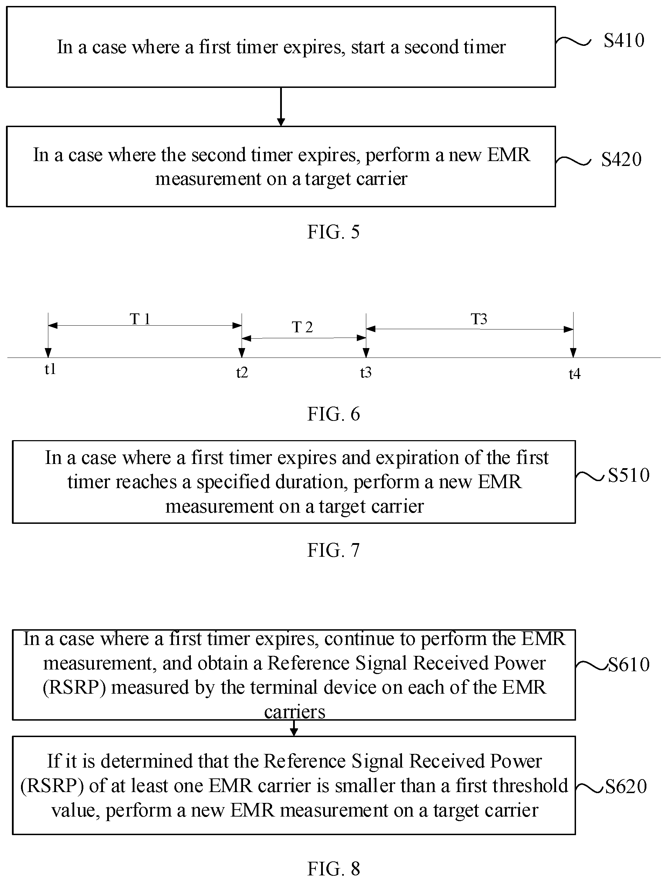

FIG. 5 is a flowchart of a communication method according to some further embodiments. As shown in FIG. 5, the communication method may be applied in a terminal device, and includes the following steps.

In step S410, in a case where a first timer expires, a second timer is started.

In an embodiment of the present disclosure, the terminal device may perform an EMR measurement when the first timer is started and before it does not expire. The first timer may be a timer T331. In other words, the terminal device may start performing the EMR measurement after the first timer is started, and stop performing the EMR measurement after the first timer expires, that is, the terminal device may no longer perform the EMR measurement after the first timer expires.

As an optional method, in a case where the first timer is detected to have expired, the terminal device may start a second timer. The second timer may be sent by the network side device. That is, the terminal device may receive the second timer from the network side device through a network configuration.

Here, the second timer may also be referred to as a validity timer. The validity timer may be configured by the network side device through the IEMeasIdleConfig. It should be noted that the network side device may configure the duration of the second timer according to the actual situation, that is, the timing of the second timer is configurable. For example, at a first time moment, the timing of the second timer is 5s. For another example, at a second moment, the timing of the second timer is 6s.

In step S420, in a case where the second timer expires, a new EMR measurement is performed on a target carrier.

In some implementations, after the second timer is started, the terminal device may detect whether the timing of the second timer has expired. If it is determined that the second timer has expired, a new EMR measurement may be performed on the target carrier. In an embodiment of the present disclosure, whether the timing of the second timer has expired may be a validity condition for the result of the Early Measurement Report (EMR) measurement in the above embodiments. If the second timer does not expire, it indicates that the result of the Early Measurement Report (EMR) is valid. On the contrary, if the second timer expires, it indicates that the result of the Early Measurement Report (EMR) measurement is invalid. At this time, the terminal device may perform a new EMR measurement on the target carrier.

In order to better illustrate a relationship between the first timer and the second timer, an embodiment of the present disclosure provides an example diagram as shown in FIG. 6. The first timer is started at t1, that is, the terminal device starts to perform an EMR measurement on a configured carrier at t1. The duration of the first timer is a duration from t1 to t2, that is, the duration of the first timer is T1. In addition, the first timer expires at t2 in FIG. 6, at which time the terminal device may stop the EMR measurement on the configured carrier.

Optionally, the second timer may be started at the same time as the first timer expires, that is, the second timer may be started at t2, and then the second timer expires at t3. As shown in FIG. 6, the duration of the second timer is a duration from t2 to t3, that is, the duration of the second timer is T2, and the EMR measurement result is valid between t2 and t3. The EMR measurement result is invalid after t3, and a new measurement procedure may be started at this time. That is, in a case where the second timer expires (T3), the terminal device may perform a new EMR measurement on a target carrier.

In addition, the terminal device may receive Msg1 at t4 as shown in FIG. 6, and may initiate a random access (Physical Random Access Channel) procedure.

As an example, the terminal device may perform an EMR measurement in an idle state/inactive state according to information configured through IE MeasIdleConfig. When the timer T331 expires, a timer for the validity period of the EMR measurement result configured by the network side device is started, that is, the second timer is started. When the timer expires, the terminal device may start to perform a new terminal device measurement on a target carrier, that is, perform a new EMR measurement.

In an embodiment of the present disclosure, the target carrier may be any one of the following: a new air interface NR carrier; an Evolved Universal Terrestrial Radio Access Network (E-UTRAN) carrier.

It should be noted that if the network side device configures multiple validity conditions for the result of the Early Measurement Report (EMR) measurement at the same time, the terminal device may start to perform a new terminal device measurement on a target carrier as long as one of the conditions is not fulfilled. In other words, as long as one of the RSRP threshold value (the first threshold value), the RSRP threshold difference (the second threshold value), the timer (the second timer) and the specified duration (validity time specified in the specification) does not fulfill a condition, a new terminal device measurement may be performed on the target carrier.

It should be noted that, for multiple embodiments or features separated by "or", even if some of the features are unimplementable, no influence will be caused to other solutions. In addition, embodiments of the present disclosure may be combined with other embodiments or implementations involved in the communication method(s) applied at the terminal device and various optional solutions thereof if such combination will not result in contradiction, and repeated descriptions will be omitted here.

As specified in the embodiments of the present disclosure, the terminal device may perform the Early Measurement Report (EMR) measurement according to the network configuration or the specification. The network configuration or the specification includes the validity condition for the result of the Early Measurement Report (EMR) measurement. By using the validity condition for the result of the Early Measurement Report (EMR) measurement, the validity and reliability of the reported measurement result can be guaranteed. In addition, in the embodiments of the present disclosure, whether the result of the Early Measurement Report (EMR) measurement fulfills the validity condition can be determined through the second timer in the network configuration sent by the network side device, so as to further ensure the validity of the measurement result.

FIG. 7 is a flowchart of a communication method according to some other embodiments. As shown in FIG. 7, the communication method may be applied in a terminal device, and includes the following step.

In step S510, in a case where the first timer expires and the expiration of the first timer reaches a specified duration, a new EMR measurement is performed on a target carrier.

In some implementations, the terminal device may perform an EMR measurement when the first timer is started and before the first timer does not expire. The first timer may be a timer T331. In other words, the terminal device may start performing the EMR measurement after the first timer is started, and stop performing the EMR measurement after the first timer expires, that is, the EMR measurement may no longer be performed after the first timer expires.

As an optional method, in a case where the first timer is detected to have expired, the terminal device may obtain the expiration duration of the first timer and determine whether the expiration duration reaches a specified duration or exceeds the specified duration. If it is determined that the expiration duration of the first timer reaches the specified duration or exceeds the specified duration, the terminal device may perform a new EMR measurement on the target carrier. The specified duration may be a validity time for the EMR measurement result specified in the specification.

In the embodiment of the present disclosure, whether the expiration of the first timer reaches the specified duration (or exceeds the specified duration) may be the validity condition for the result of the Early Measurement Report (EMR) measurement in the above embodiments. If the expiration of the first timer does not reach the specified duration, it indicates that the result of the Early Measurement Report (EMR) measurement is valid. Conversely, if the expiration of the first timer reaches the specified duration, it indicates that the result of the Early Measurement Report (EMR) measurement is invalid. At this time, the terminal device may perform a new EMR measurement on a target carrier.

As an example, the terminal device may perform an EMR measurement in the idle state/inactive state according to information configured through IE MeasIdleConfig. When the timer T331 expires, the terminal device may start to perform a new terminal device measurement (that is, perform a new EMR measurement) on a target carrier [X]s after expiration of the timer T331, where X may be the validity time for the EMR measurement result specified in the specification, that is, the specified duration mentioned in the above embodiments.

In an embodiment of the present disclosure, the target carrier may be any one of the following: a new air interface NR carrier; an Evolved Universal Terrestrial Radio Access Network (E-UTRAN) carrier.

It should be noted that if the network side device configures multiple validity conditions for the result of the Early Measurement Report (EMR) measurement at the same time, the terminal device may start to perform a new terminal device measurement on a target carrier as long as one of the conditions is not fulfilled. In other words, as long as one of the RSRP threshold value (the first threshold value), the RSRP threshold difference (the second threshold value), the timer (second timer) and the specified duration (the validity time specified in the specification) does not fulfill a condition, a new terminal device measurement may be performed on the target carrier.

It should be noted that, for multiple embodiments or features separated by "or", even if some of the features are unimplementable, no influence will be caused to other solutions. In addition, embodiments of the present disclosure may be combined with other embodiments or implementations involved in the communication method(s) applied at the terminal device and various optional solutions thereof if such combination will not result in contradiction, and repeated descriptions will be omitted here.

As specified in the embodiments of the present disclosure, the terminal device may perform the Early Measurement Report (EMR) measurement according to the network configuration or the specification. The network configuration or the specification includes the validity condition for the result of the Early Measurement Report (EMR) measurement. By using the validity condition for the result of the Early Measurement Report (EMR) measurement, the validity and reliability of the reported measurement result can be guaranteed. In addition, in the embodiments of the present disclosure, whether the result of the Early Measurement Report (EMR) measurement fulfills the validity condition can be determined through the specified duration in the specification, so as to further ensure the validity of the measurement result.

FIG. 8 is a flowchart of a communication method according to some further embodiments. As shown in FIG. 8, the communication method may be applied in a terminal device, and includes the following steps.

In step S610, in a case where the first timer expires, performing of the EMR measurement is continued, and the Reference Signal Received Power (RSRP) measured by the terminal device on each EMR carrier is obtained.

In some implementations, in a case where the first timer is detected to have expired, the terminal device may continue to perform the EMR measurement. As a specific implementation, the terminal device may continue to perform the EMR measurement after the EMR measurement timer T331 expires.

In an embodiment of the present disclosure, after continuing to perform the EMR measurement, the terminal device may obtain the Reference Signal Received Power (RSRP) measured by the terminal device on each EMR carrier. On this basis, the terminal device may determine whether the Reference Signal Received Power (RSRP) of at least one EMR carrier is smaller than a first threshold value. If it is determined that the Reference Signal Received Power (RSRP) of at least one EMR carrier is smaller than the first threshold value, a new EMR measurement is performed on the target carrier, that is, the method moves to step S620.

In step S620, if it is determined that the Reference Signal Received Power (RSRP) of at least one EMR carrier is smaller than the first threshold value, a new EMR measurement is performed on the target carrier.

In an embodiment of the present disclosure, the first threshold value may be an RSRP threshold value sent by the network side device through a network configuration. In other words, the terminal device may receive a network configuration including the first threshold value from the network side device to determine whether to perform a new EMR measurement through the first threshold value.

In some implementations, determining whether the Reference Signal Received Power (RSRP) of at least one EMR carrier is smaller than the first threshold value may be the validity condition for the result of the Early Measurement Report (EMR) measurement in the above embodiments. If it is determined that no EMR carrier has a Reference Signal Received Power (RSRP) smaller than the first threshold value, it indicates that the result of the Early Measurement Report (EMR) measurement is valid. Conversely, if it is determined that the Reference Signal Received Power (RSRP) of at least one EMR carrier is smaller than the first threshold value, it indicates that the result of the Early Measurement Report (EMR) measurement is invalid, and at this time, the terminal device may perform a new EMR measurement on the target carrier.

As an example, the terminal device may perform an EMR measurement in the idle state/inactive state according to information configured through IE MeasIdleConfig. When timer T331 expires, the terminal device may continue to perform the EMR measurement. If the RSRP values measured by the terminal device on all configured EMR carriers are smaller than the configured RSRP threshold value, the terminal device may start to perform a new terminal device measurement on the target carrier.

It should be noted that if the network side device configures multiple validity conditions for the result of the Early Measurement Report (EMR) measurement at the same time, the terminal device may start to perform a new terminal device measurement on the target carrier as long as one of the conditions is not fulfilled. In other words, as long as one of the RSRP threshold value (the first threshold value), the RSRP threshold difference (second threshold value), the timer (the second timer) and the specified duration (the validity time in the specification) does not fulfill a condition, a new terminal device measurement may be performed on the target carrier.

In an embodiment of the present disclosure, the target carrier may be any one of the following: a new air interface NR carrier; an Evolved Universal Terrestrial Radio Access Network (E-UTRAN) carrier.

It should be noted that, for multiple embodiments or features separated by "or", even if some of the features are unimplementable, no influence will be caused to other solutions. In addition, embodiments of the present disclosure may be combined with other embodiments or implementations involved in the communication method(s) applied at the terminal device and various optional solutions thereof if such combination will not result in contradiction, and repeated descriptions will be omitted here.

As specified in the embodiments of the present disclosure, the terminal device may perform the Early Measurement Report (EMR) measurement according to the network configuration or the specification. The network configuration or the specification includes the validity condition for the result of the Early Measurement Report (EMR) measurement. By using the validity condition for the result of the Early Measurement Report (EMR) measurement, the validity and reliability of the reported measurement result can be guaranteed. In addition, in the embodiments of the present disclosure, whether the result of the Early Measurement Report (EMR) measurement fulfills the validity condition can be determined through the first threshold value configured by the network, so as to further ensure the validity of the measurement result.

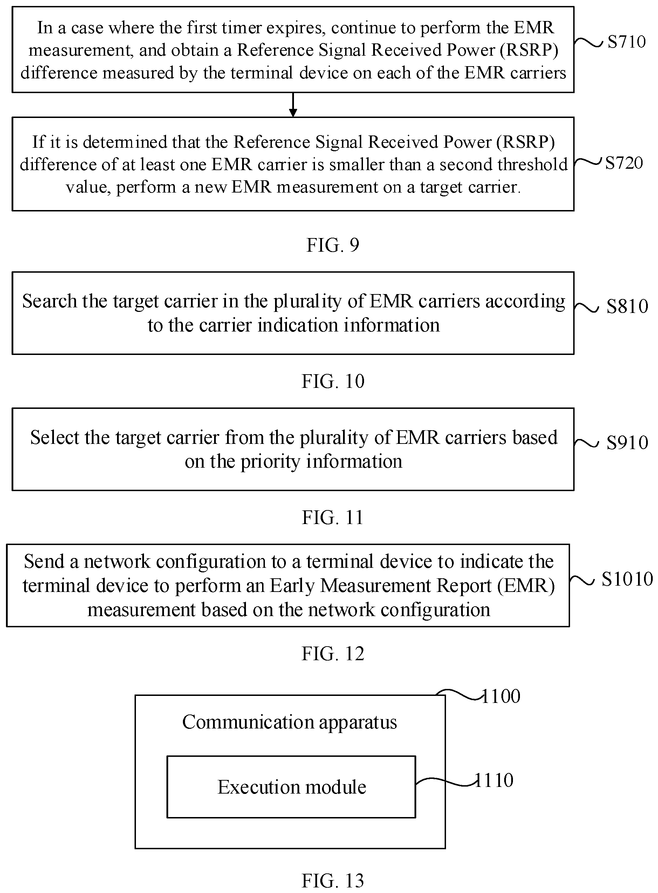

FIG. 9 is a flowchart of a communication method according to some other embodiments. As shown in FIG. 9, the communication method may be applied in a terminal device, and includes the following steps.

In step S710, in a case where the first timer expires, performing of the EMR measurement is continued, and a Reference Signal Received Power (RSRP) difference measured by the terminal device on each EMR carrier is obtained.

In some implementations, in a case where the first timer is detected to have expired, the terminal device may continue to perform the EMR measurement. As a specific implementation, the terminal device may continue to perform the EMR measurement after the EMR measurement timer T331 expires.

In an embodiment of the present disclosure, after continuing to perform the EMR measurement, the terminal device may obtain the Reference Signal Received Power (RSRP) difference measured by the terminal device on each EMR carrier. The Reference Signal Received Power (RSRP) difference may be equal to the strongest Reference Signal Received Power (RSRP) value minus a current Reference Signal Received Power (RSRP) measurement value.

On this basis, the terminal device may determine whether the Reference Signal Received Power (RSRP) difference of at least one EMR carrier is smaller than the second threshold value. If it is determined that the Reference Signal Received Power (RSRP) difference of at least one EMR carrier is smaller than the second threshold value, a new EMR measurement is performed on the target carrier, that is, the method moves to step S720.

In step S720, if it is determined that the Reference Signal Received Power (RSRP) difference of at least one EMR carrier is smaller than the second threshold, a new EMR measurement is performed on the target carrier.

In an embodiment of the present disclosure, the second threshold value may be an RSRP threshold value sent by the network side device through a network configuration. In other words, the terminal device may receive the network configuration including the second threshold value from the network side device to determine whether to perform a new EMR measurement through the second threshold value.

In some implementations, determining whether the Reference Signal Received Power (RSRP) difference of at least one EMR carrier is smaller than the second threshold value may be the validity condition for the result of the Early Measurement Report (EMR) measurement in the above embodiments, and if it is determined that no EMR carrier has a Reference Signal Received Power (RSRP) difference smaller than the second threshold value, it indicates that the result of the Early Measurement Report (EMR) measurement is valid. Conversely, if it is determined that the Reference Signal Received Power (RSRP) difference of at least one EMR carrier is smaller than the second threshold value, it indicates that the result of the Early Measurement Report (EMR) measurement is invalid, and at this time, the terminal device may perform a new EMR measurement on the target carrier.

As an example, the terminal device may perform an EMR measurement in idle state/inactive state according to information configured through IE MeasIdleConfig. When timer T331 expires, the terminal device may continue to perform the EMR measurement. If the RSRP differences measured by the terminal device on all configured EMR carriers are smaller than the configured RSRP difference threshold value, the terminal device may start to perform a new terminal device measurement on the target carrier, that is, perform a new EMR measurement.

It should be noted that if the network side device configures multiple validity conditions for the result of the EMR measurement at the same time, the terminal device may start to perform a new terminal device measurement on the target carrier as long as one of the conditions is not fulfilled. In other words, as long as one of the RSRP threshold value (the first threshold value), the RSRP threshold difference (the second threshold value), the timer (the second timer) and the specified duration (the validity time specified in the specification) does not fulfill a condition, a new terminal device measurement may be performed on the target carrier.

In an embodiment of the present disclosure, the target carrier may be any one of the following: a new air interface NR carrier; an Evolved Universal Terrestrial Radio Access Network (E-UTRAN) carrier.

It should be noted that, for multiple embodiments or features separated by "or", even if some of the features are unimplementable, no influence will be caused to other solutions. In addition, embodiments of the present disclosure may be combined with other embodiments or implementations involved in the communication method(s) applied at the terminal device and various optional solutions thereof if such combination will not result in contradiction, and repeated descriptions will be omitted here.

As specified in the embodiments of the present disclosure, the terminal device may perform the Early Measurement Report (EMR) measurement according to the network configuration or the specification. The network configuration or the specification includes the validity condition for the result of the Early Measurement Report (EMR) measurement. By utilizing the validity condition for the result of the Early Measurement Report (EMR) measurement, the validity and reliability of the reported measurement result can be guaranteed. In addition, in the embodiments of the present disclosure, whether the result of the Early Measurement Report (EMR) measurement fulfills the validity condition can be determined through the second threshold value configured by the network, so as to further ensure the validity of the measurement result.

FIG. 10 is a flowchart of a communication method according to some further embodiments. As shown in FIG. 10, the communication method may be applied in a terminal device, and includes the following step.

In step S810, a target carrier is searched among multiple EMR carriers according to carrier indication information.

In some implementations, the network configuration sent by the network side device may include carrier indication information, and the terminal device may search a target carrier among multiple EMR carriers according to the carrier indication information. The carrier indication information may be indication information for a new terminal device measurement configured by the network side device through IE MeasIdleConfig, and the carrier indication information is used to indicate on which carrier the terminal device performs a new EMR measurement when the measurement result is invalid.

As can be known from the above introductions, the terminal device may perform a new EMR measurement on a target carrier, and the target carrier may be a new air interface NR carrier or an Evolved Universal Terrestrial Radio Access Network (E-UTRAN) carrier, etc.

In an embodiment of the present disclosure, the network configuration may include multiple carriers, and the carrier indication information is used to indicate a certain carrier in the EMR measurement configuration.

It should be noted that, for multiple embodiments or features separated by "or", even if some of the features are unimplementable, no influence will be caused to other solutions. In addition, embodiments of the present disclosure may be combined with other embodiments or implementations involved in the communication method(s) applied at the terminal device and various optional solutions thereof if such combination will not result in contradiction, and repeated descriptions will be omitted here.

As specified in the embodiments of the present disclosure, the terminal device may perform the EMR measurement according to the network configuration or the specification. The network configuration or the specification includes the validity condition for the result of the Early Measurement Report (EMR) measurement. By utilizing the validity condition for the result of the Early Measurement Report (EMR) measurement, the validity and reliability of the reported measurement result can be guaranteed. In addition, in the embodiments of the present disclosure, the target carrier can be searched in multiple EMR carriers through the carrier indication information sent by the network side device, so that communication can be carried out more quickly and conveniently.

FIG. 11 is a flowchart of a communication method according to some other embodiments. As shown in FIG. 11, the communication method may be applied in a terminal device, and includes the following step.

In step S910, a target carrier is selected from multiple EMR carriers based on priority information.

In some implementations, the network configuration sent by the network side device may include multiple pieces of priority information, and each EMR carrier may correspond to one piece of priority information. The terminal device may select the target carrier from multiple EMR carriers based on the priority information. Here, the target carrier may be a new air interface NR carrier or an Evolved Universal Terrestrial Radio Access Network (E-UTRAN) carrier, etc. In addition, a priority of the target carrier may be higher than or equal to a specified threshold value (a specified priority).

In a specific implementation, the embodiment of the present disclosure adds EMR carrier priority information in IE MeasIdleConfig. That is, each carrier in the configuration information sent by the network side device may be configured with a corresponding priority. In addition, the configuration information may also include a specified priority (P). The specified priority (P) may also be referred to as enhanced measurement carrier indication information. The terminal device may measure an EMR carrier with a priority higher than or equal to P, and the specified priority may be the above-mentioned specified threshold value.

As an example, the network configuration includes four carriers, and the priority information of these four carriers is P1, P2, P3 and P4, respectively. By comparison, it is known that the priorities of P1 and P2 are higher than the specified priority (P). At this time, the carriers corresponding to P1 and P2 may be used as target carriers.

It should be noted that, for multiple embodiments or features separated by "or", even if some of the features are unimplementable, no influence will be caused to other solutions. In addition, embodiments of the present disclosure may be combined with other embodiments or implementations involved in the communication method(s) applied at the terminal device and various optional solutions thereof if such combination will not result in contradiction, and repeated descriptions will be omitted here.

As specified in the embodiments of the present disclosure, the terminal device may perform the Early Measurement Report (EMR) measurement according to the network configuration or the specification. The network configuration or the specification includes the validity condition for the result of the Early Measurement Report (EMR) measurement. By utilizing the validity condition for the result of the Early Measurement Report (EMR) measurement, the validity and reliability of the reported measurement result can be guaranteed. In addition, in the embodiments of the present disclosure, a target carrier can be selected from multiple EMR carriers through the priority information corresponding to each carrier sent by the network side device, so that communication can be carried out more accurately and effectively.

FIG. 12 is a flowchart of a communication method according to some embodiments. As shown in FIG. 12, the communication method may be applied in a network side device, including the following step.

In step S 1010, a network configuration is sent to a terminal device to indicate the terminal device to perform an Early Measurement Report (EMR) measurement based on the network configuration.

In some embodiments, the network configuration may include a second timer for indicating the terminal device to perform a new EMR measurement on a target carrier in a case where the second timer expires.

In some other embodiments, the network configuration may further include EMR carriers and priority information corresponding to each carrier for indicating the terminal device to select a target carrier from multiple EMR carriers based on the priority information. Here, the priority of the target carrier may be higher than or equal to a specified threshold value.

In some implementations, the target carrier is any one of the following: a new air interface NR carrier; an Evolved Universal Terrestrial Radio Access Network (E-UTRAN) carrier.

In some other implementations, the network configuration may further include carrier indication information which is used to indicate the terminal device to search a target carrier among multiple EMR carriers according to the carrier indication information.

In some other implementations, the network configuration may further include a first threshold value for indicating the terminal device to perform a new EMR measurement on the target carrier in a case where a Reference Signal Received Power (RSRP) of at least one EMR carrier is smaller than a first threshold value.

In some other implementations, the network configuration may further include a second threshold value for indicating the terminal device to perform a new EMR measurement on the target carrier in a case where a Reference Signal Received Power (RSRP) difference of at least one EMR carrier is smaller than a second threshold value.

In the embodiments of the present disclosure, the network side device may configure the validity condition for the EMR measurement result through IE MeasIdleConfig, or the validity condition for the EMR measurement result may be specified through a specification. When the EMR measurement result is determined to be invalid, the terminal device may perform a new terminal device measurement on a specified carrier, that is, perform a new EMR measurement.

It should be noted that, for multiple embodiments or features separated by "or", even if some of the features are unimplementable, no influence will be caused to other solutions. In addition, embodiments of the present disclosure may be combined with other embodiments or implementations involved in the communication method(s) applied at the terminal device and various optional solutions thereof if such combination will not result in contradiction, and repeated descriptions will be omitted here.

In the embodiments of the present disclosure, the network side device may send the network configuration to the terminal device to indicate the terminal device to perform the Early Measurement Report (EMR) measurement based on the network configuration, and the network configuration may include the validity condition for the result of the Early Measurement Report (EMR) measurement. Thus, the validity and reliability of the reported measurement result can be guaranteed.

FIG. 13 is a block diagram of a communication apparatus 1100 according to some embodiments. Referring to FIG. 13, the communication apparatus 1100 is applied in a terminal device, and the communication apparatus 1100 may include an execution module 1110.

The execution module 1110 is configured to perform an Early Measurement Report (EMR) measurement according to a network configuration or s specification. The network configuration or the specification includes a validity condition for a result of the Early Measurement Report (EMR) measurement.

In some implementations, the execution module 1110 may include:
a timer start submodule configured to start a second timer in a case where a first timer expires, wherein the terminal device performs the EMR measurement when the first timer starts and before the first timer does not expire; and
a first execution submodule configured to perform a new EMR measurement on a target carrier in a case where the second timer expires.

In some implementations, the execution module 1110 may further include:
a second execution submodule configured to perform a new EMR measurement on a target carrier in a case where a first timer expires and the expiration of the first timer reaches a specified duration, wherein the specified duration is a validity time for the result of the EMR measurement in the specification.

In some implementations, the network configuration includes multiple EMR carriers, and the execution module 1110 may further include:
a received power obtaining submodule configured to, in a case where the first timer expires, continue to perform the EMR measurement, and obtain a Reference Signal Received Power (RSRP) measured by the terminal device on each of the EMR carriers; and
a third execution submodule configured to perform a new EMR measurement on a target carrier if it is determined that the Reference Signal Received Power (RSRP) of at least one EMR carrier is smaller than a first threshold value.

In some embodiments, the network configuration includes multiple EMR carriers, and the execution module 1110 may further include:
a received power difference obtaining submodule configured to, in a case where the first timer expires, continue to perform the EMR measurement, and obtain a Reference Signal Received Power (RSRP) difference measured by the terminal device on each of the EMR carriers; and
a fourth execution submodule configured to perform a new EMR measurement on a target carrier if it is determined that the Reference Signal Received Power (RSRP) difference of at least one EMR carrier is smaller than a second threshold value.

In some implementations, the target carrier is any one of the following:
a new air interface NR carrier;
an Evolved Universal Terrestrial Radio Access Network (E-UTRAN) carrier.

In some implementations, the network configuration includes carrier indication information, and the communication apparatus 1100 may further include:
a search module configured to search the target carrier among the multiple EMR carriers according to the carrier indication information.

In some implementations, the network configuration further includes multiple pieces of priority information, each of the EMR carriers corresponds to one pieces of priority information, and the communication apparatus 1100 may further include:
a selection module configured to select the target carrier from the multiple EMR carriers based on the priority information, wherein the priority of the target carrier is higher than or equal to a specified threshold value.

As specified in the embodiments of the present disclosure, the terminal device may perform the Early Measurement Report (EMR) measurement according to the network configuration or the specification, wherein the network configuration or the specification includes the validity condition for the result of the Early Measurement Report (EMR) measurement. By utilizing the validity condition for the result of the Early Measurement Report (EMR) measurement, the validity and reliability of the reported measurement result can be guaranteed.

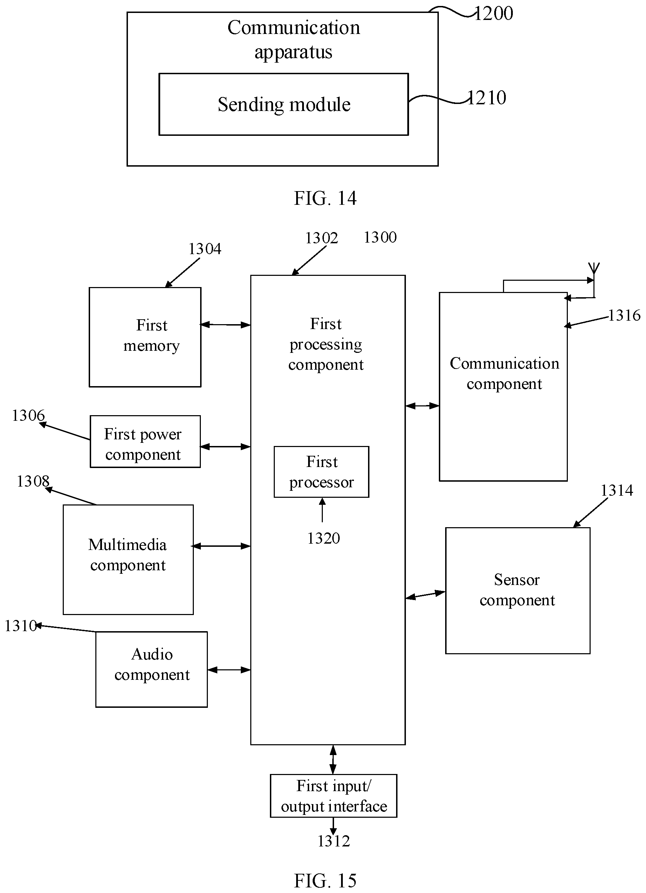

FIG. 14 is a block diagram of a communication apparatus 1200 according to some embodiments. Referring to FIG. 14, the communication apparatus 1200 is applied in a network side device, and the communication apparatus 1200 may include a sending module 1210.

The sending module 1210 is configured to send a network configuration to a terminal device to indicate the terminal device to perform an Early Measurement Report (EMR) measurement based on the network configuration, wherein the network configuration includes a validity condition for a result of the Early Measurement Report (EMR) measurement.

In some implementations, the network configuration includes a second timer for indicating the terminal device to perform a new EMR measurement on a target carrier in a case where the second timer expires.

In some implementations, the network configuration further includes EMR carriers and priority information corresponding to each carrier for indicating the terminal device to select a target carrier from multiple EMR carriers based on the priority information, and the priority of the target carrier is higher than or equal to a specified threshold value.

In some implementations, the network configuration further includes carrier indication information used to indicate the terminal device to search the target carrier among the multiple EMR carriers according to the carrier indication information.

In the embodiments of the present disclosure, the network side device may send the network configuration to the terminal device to indicate the terminal device to perform the Early Measurement Report (EMR) measurement based on the network configuration, wherein the network configuration may include the validity condition for the result of the Early Measurement Report (EMR) measurement. Thus, the validity and reliability of the reported measurement result can be guaranteed.

Regarding the apparatuses in the above embodiments, the specific manner in which each module performs the operations has been described in detail in the embodiments of the methods, and will not be elaborated here.

The present disclosure further provides a computer-readable storage medium having computer program instructions stored thereon. When the program instructions are executed by a processor, the step(s) of the communication method(s) provided by the present disclosure is(are) implemented.

FIG. 15 is a block diagram of a terminal device 1300 according to some embodiments. For example, the terminal device 1300 may be a mobile phone, a computer, a digital broadcast terminal, a messaging device, a gaming console, a tablet, a medical device, exercise equipment, a personal digital assistant, an intelligent vehicle, and the like.

Referring to FIG. 15, the terminal device 1300 may include one or more of the following components: a first processing component 1302, a first memory 1304, a first power component 1306, a multimedia component 1308, an audio component 1310, a first input/output (I/O) interface 1312, a sensor component 1314, and a communication component 1316.

The first processing component 1302 typically controls overall operations of the terminal device 1300, such as the operations associated with display, telephone calls, data communications, camera operations, and recording operations. The first processing component 1302 may include one or more first processors 1320 to execute instructions to perform all or part of the steps in the above described communication methods. Moreover, the first processing component 1302 may include one or more modules which facilitate the interaction between the first processing component 1302 and other components. For instance, the first processing component 1302 may include a multimedia module to facilitate the interaction between the multimedia component 1308 and the first processing component 1302.

The first memory 1304 is configured to store various types of data to support the operation of the terminal device 1300. Examples of such data include instructions for any applications or methods operated on the terminal device 1300, contact data, phonebook data, messages, pictures, video, etc. The first memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The first power component 1306 provides power to various components of the terminal device 1300. The first power component 1306 may include a power management system, one or more power sources, and any other components associated with the generation, management, and distribution of power in the terminal device 1300.

The multimedia component 1308 includes a screen providing an output interface between the terminal device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive an external multimedia datum while the terminal device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the terminal device 1300 is in an operation mode, such as a call mode, a recording mode, and a voice recognition mode. The received audio signal may be further stored in the first memory 1304 or transmitted via the communication component 1316. In some embodiments, the audio component 1310 further includes a speaker to output audio signals.

The first input/output interface 1312 provides an interface between the first processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the terminal device 1300. For instance, the sensor component 1314 may detect an open/closed status of the terminal device 1300, relative positioning of components, e.g., the display and the keypad, of the terminal device 1300, a change in position of the terminal device 1300 or a component of the terminal device 1300, a presence or absence of user contact with the terminal device 1300, an orientation or an acceleration/deceleration of the terminal device 1300, and a change in temperature of the terminal device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the terminal device 1300 and other devices. The terminal device 1300 can access a wireless network based on a communication standard, such as WiFi, 2G, or 3G, or a combination thereof. In one example embodiment, the communication component 1316 receives a broadcast signal or broadcast associated information from an external broadcast management system via a broadcast channel. In one example embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the terminal device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described communication methods.

In example embodiments, there is also provided a non-transitory computer-readable storage medium including instructions, such as the first memory 1304 including instructions executable by the first processor 1320 in the terminal device 1300, for performing the above-described communication methods. For example, the non-transitory computer-readable storage medium may be a ROM, a Random Access Memory (RAM), a CD-ROM, a magnetic tape, a floppy disc, an optical data storage device, and the like.

In addition to being an independent electronic device, the above-mentioned apparatus may also be a part of an independent electronic device. For example, in an embodiment, the apparatus may be an Integrated Circuit (IC) or a chip. The integrated circuit may be an IC or a collection of multiple ICs. The chip may include but is not limited to the following types: Graphics Processing Unit (GPU, graphics processor), Central Processing Unit (CPU, central processor), Field Programmable Gate Array (FPGA, programmable logical array), Digital Signal Processor (DSP), Application Specific Integrated Circuit (ASIC), System on Chip (SOC, SoC, system on chip or system-level chip), etc. The above-mentioned integrated circuit or chip may be configured to execute executable instructions (or codes) to implement the above-mentioned communication methods. The executable instructions may be stored in the integrated circuit or chip, or may be obtained from other device(s) or equipment. For example, the integrated circuit or chip includes a processor, a memory, and an interface for communicating with other device(s). The executable instructions may be stored in the memory, and when the executable instructions are executed by the processor, the above-mentioned communication methods are implemented. Alternatively, the integrated circuit or chip may receive the executable instructions through the interface and transmit the executable instructions to the processor for execution, so as to implement the above-mentioned communication methods.

In another example embodiment, a computer program product is also provided. The computer program product includes a computer program executable by a programmable apparatus, and the computer program has a code portion for implementing the above communication methods when executed by the programmable apparatus.

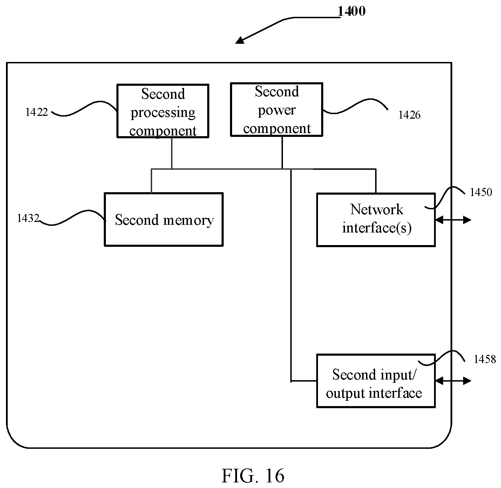

FIG. 16 is a block diagram of a network side device according to an example embodiment. For example, the network side device 1400 may be provided as a server. Referring to FIG. 16, the network side device 1400 includes a second processing component 1422 that further includes one or more processors, and memory resources represented by a second memory 1432 for storing instructions executable by the second processing component 1422, such as application programs. The application programs stored in the second memory 1432 may include one or more modules each corresponding to a set of instructions. Further, the second processing component 1422 is configured to execute the instructions to perform the communication methods.

The network side device 1400 may also include a second power component 1426 configured to perform power management of the network side device 1400, wired or wireless network interface(s) 950 configured to connect the network side device 1400 to a network, and a second input/output (I/O) interface 1458. The network side device 1400 may operate based on an operating system stored in the memory 1432, such as Windows Server^{™}, Mac OS X^{™}, Unix^{™}, Linux^{™}, FreeBSD^{™}, or the like.

Other embodiments of the present disclosure will be apparent to those skilled in the art from consideration of the description and practice of the present disclosure. The present disclosure is intended to cover any variations, uses, or adaptations of the present disclosure following the general principles thereof and including such departures from the present disclosure as come within known or customary practice in the art. It is intended that the description and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A communication method, wherein the method is applied in a terminal device, and the method comprises:
performing an Early Measurement Report (EMR) measurement according to a network configuration or a specification, wherein the network configuration or the specification comprises a validity condition for a result of the Early Measurement Report (EMR) measurement.

2. The method according to claim 1, wherein performing the Early Measurement Report (EMR) measurement according to the network configuration or the specification comprises:
in a case where a first timer expires, starting a second timer, wherein the terminal device performs the EMR measurement upon starting of the first timer and before the first timer does not expire; and
in a case where the second timer expires, performing a new EMR measurement on a target carrier.

3. The method according to claim 1, wherein performing the Early Measurement Report (EMR) measurement according to the network configuration or the specification comprises:
in a case where a first timer expires and expiration of the first timer reaches a specified duration, performing a new EMR measurement on a target carrier, wherein the specified duration is a validity time for the result of the EMR measurement in the specification.

4. The method according to claim 1, wherein the network configuration comprises multiple EMR carriers;
wherein performing the Early Measurement Report (EMR) measurement according to the network configuration or the specification comprises:
in a case where a first timer expires, continuing to perform the EMR measurement, and obtaining a Reference Signal Received Power (RSRP) measured by the terminal device on each of the EMR carriers;
if it is determined that the Reference Signal Received Power (RSRP) of at least one EMR carrier is smaller than a first threshold value, performing a new EMR measurement on a target carrier.

5. The method according to claim 1, wherein the network configuration comprises multiple EMR carriers;
wherein performing the Early Measurement Report (EMR) measurement according to the network configuration or the specification comprises:
in a case where a first timer expires, continuing to perform the EMR measurement, and obtaining a Reference Signal Received Power (RSRP) difference measured by the terminal device on each of the EMR carriers; and
if it is determined that the Reference Signal Received Power (RSRP) difference of at least one EMR carrier is smaller than a second threshold value, performing a new EMR measurement on a target carrier.

6. The method according to any one of claim 4 or 5, wherein the target carrier is any one of:
a new air interface NR carrier;
an Evolved Universal Terrestrial Radio Access Network (E-UTRAN) carrier.

7. The method according to any one of claim 4 or 5, wherein the network configuration comprises carrier indication information, and the method further comprises:
searching the target carrier in the multiple EMR carriers according to the carrier indication information.

8. The method according to any one of claim 4 or 5, wherein the network configuration further comprises multiple pieces of priority information, each of the EMR carriers corresponds to one of the pieces of priority information, and the method further comprises:
selecting the target carrier from the multiple EMR carriers based on the priority information, wherein a priority of the target carrier is higher than or equal to a specified threshold value.

9. A communication method, wherein the method is applied in a network side device, and the method comprises:
sending a network configuration to a terminal device to indicate the terminal device to perform an Early Measurement Report (EMR) measurement based on the network configuration, wherein the network configuration comprises a validity condition for a result of the Early Measurement Report (EMR) measurement.

10. The method according to claim 9, wherein the network configuration comprises a second timer used to indicate the terminal device to perform a new EMR measurement on a target carrier in a case where the second timer expires.

11. The method according to claim 10, wherein the network configuration further comprises EMR carriers and priority information corresponding to each of the carriers for indicating the terminal device to select the target carrier from the multiple EMR carriers based on the priority information, and a priority of the target carrier is higher than or equal to a specified threshold value.

12. The method according to claim 11, wherein the network configuration further comprises carrier indication information used to indicate the terminal device to search the target carrier in the multiple EMR carriers according to the carrier indication information.

13. A communication apparatus, wherein the apparatus is applied in a terminal device, and the apparatus comprises:
an execution module configured to perform an Early Measurement Report (EMR) measurement according to a network configuration or a specification, wherein the network configuration or the specification comprises a validity condition for a result of the Early Measurement Report (EMR) measurement.

14. A communication apparatus, wherein the apparatus is applied in a network side device, and the apparatus comprises:
a sending module configured to send a network configuration to a terminal device to indicate the terminal device to perform an Early Measurement Report (EMR) measurement based on the network configuration, wherein the network configuration comprises a validity condition for a result of the Early Measurement Report (EMR) measurement.

15. A terminal device, comprising:
a processor; and
a memory configured to store instructions executable by the processor;
wherein the processor is configured to execute the executable instructions to implement the method according to any one of claims 1 to 8.

16. A network side device, comprising:
a processor; and
a memory configured to store instructions executable by the processor;
wherein the processor is configured to execute the executable instructions to implement the method according to any one of claims 9 to 12.

17. A communication system, comprising:
a terminal device configured to implement the method according to any one of claims 1 to 8; and
a network side device configured to implement the method according to any one of claims 9 to 12.

18. A computer-readable storage medium having computer program instructions stored thereon, wherein when the program instructions are executed by a processing apparatus, a step of the method according to any one of claims 1 to 12 is implemented.
